# EUROPÄISCHE PATENTSCHRIFT

(11) **EP 2 680 989 B1**
(45) Veröffentlichungstag und Bekanntmachung des Hinweises auf die Patenterteilung: **18.05.2016**
(21) Anmeldenummer: 12712567.2
(22) Anmeldetag: 02.03.2012
(51) Int. Cl.: B21K 1/18, F02F 3/00

(54) **VERFAHREN ZUR HERSTELLUNG EINES KOLBENS FÜR EINEN VERBRENNUNGSMOTOR**
METHOD FOR PRODUCING A PISTON FOR AN INTERNAL COMBUSTION ENGINE
PROCÉDÉ DE FABRICATION D'UN PISTON POUR MOTEUR À COMBUSTION INTERNE

(30) Priorität: 04.03.2011 DE 102011013141
(43) Veröffentlichungstag der Anmeldung: 08.01.2014
(73) Patentinhaber: Mahle International GmbH, 70376 Stuttgart (DE)
(72) Erfinder: SCHARP, Rainer, 71665 Vaihingen (DE); BERR, Gerhard, 71546 Aspach (DE); BOCZEK, Sascha-Oliver, 69234 Dielheim (DE); MÜLLER, Reiner, 78628 Rottweil (DE)
(74) Vertreter: Stumkat, Ulrich
(86) Internationale Anmeldenummer: PCT/DE2012/000219
(87) Internationale Veröffentlichungsnummer: WO 2012/119583

(56) Entgegenhaltungen:
- DE-A1- 2 919 638
- DE-A1- 3 222 582
- US-A1- 2011 030 214
- SCHNITZLER V ET AL: "SCHMIEDESTUCKE AUF MASS BEARBEITEN", WERKSTATT UND BETRIEB, CARL HANSER VERLAG GMBH & CO. KG, DE, Bd. 128, Nr. 1/02, 1. Februar 1995 (1995-02-01), Seiten 30-32, XP000482638, ISSN: 0043-2792

## Beschreibung

Die Erfindung betrifft ein Verfahren zur Herstellung eines Kolbens für einen Verbrennungsmotor nach dem Oberbegriff des Anspruches 1 (siehe DE-OS 29 19 638).

Aus dem Stand der Technik ist es allgemein bekannt, Kolben aus Stahl für einen Verbrennungsmotor dadurch herzustellen, das zunächst ein Kolbenoberteil im Schmiedeverfahren und ein Kolbenunterteil im Schmiedeverfahren oder durch Gießen hergestellt werden, und dann das Kolbenoberteil mit dem Kolbenunterteil verschweißt werden. Zu verweisen ist hierzu auf die Patentdokumente DE 195 01 416 A1, DE-OS 29 19 638, DE 196 03 589 A1 und DE 198 46 152 A1. Hierbei wird das Verfahren des Warmumformens, das heißt, des Warmschmiedens bei einer Stahltemperatur von 950°C bis 1300°C angewandt.

Hierbei bildet sich auf der Oberfläche des Schmiederohlings eine unkontrollierbare Oxidschicht, zu deren Beseitigung die Oberfläche des Schmiederohlings mit grobem Strahlgut gestrahlt werden muss. Dadurch ergeben sich große Schwankungen der Schmiedekontur, sodass als Folge davon eine aufwendige Nachbearbeitung des Schmiederohlings mittels eines spanenden Bearbeitungsverfahrens erforderlich ist.

Aufgabe der vorliegenden Erfindung ist es demzufolge, die genannten Nachteile des Standes der Technik zu vermeiden, wobei insbesondere eine aufwendige Nachbearbeitung der Verbrennungsmulde und des Kühlkanals vermieden werden soll.

Es ist weiterhin Aufgabe der vorliegenden Erfindung, ein Verfahren anzugeben, mit dem Kolben mit nicht rotationssymmetrisch beziehungsweise nicht zentrisch ausgebildeten Brennraummulden und Kühlkanälen auf kostengünstige Weise hergestellt werden können.

Letztlich ist es Aufgabe der vorliegenden Erfindung, ein Verfahren anzugeben, womit Kolben herstellbar sind, bei denen die Wand zwischen dem Rand der Verbrennungsmulde und dem oberen Teil des Kühlkanals über den Umfang eine konstante Stärke aufweist.

Gelöst werden diese Aufgaben mit den Merkmalen der unabhängigen Ansprüche. Vorteilhafte Ausgestaltungen der Erfindung sind Gegenstand der Unteransprüche.

Hierbei wird durch das Kaltkalibrieren oder das Kaltumformen des Schmiederohlings erreicht, dass die Verbrennungsmulde und der Kühlkanal fertig ausgeformt werden.

Einige Ausführungsbeispiele der Erfindung werden im Folgenden anhand der Zeichnungen beschrieben. Es zeigen
- Fig. 1: ein Schnittbild eines nach dem erfindungsgemäßen Verfahren hergestellten Kolbens in einer senkrecht zur Bolzenbohrungsachse liegenden Schnittebene,
- Fig. 2: ein Schnitt durch den Kolben in einer auf der Bolzenbohrungsachse liegenden Schnittebene,
- Fig. 3: einen Schnitt durch das Kolbenoberteil nach der Halbwarmumformung,
- Fig. 4: einen Schnitt durch das Kolbenoberteil nach Überdrehen der Außenkontur und der für das Reibschweißen vorgesehenen Auflagebereiche,
- Fig. 5: die Draufsicht auf eine Ausgestaltung des Kolbenoberteils mit einer asymmetrisch ausgebildeten und exzentrisch angeordneten Verbrennungsmulde,
- Fig. 6: einen Schnitt durch das Kolbenoberteil entlang der Linie VI-VI in Fig. 5,
- Fig. 7: das Kolbenoberteil und das Kolbenunterteil vor dem Fügen mittels Reibschweißen,
- Fig. 8: eine Draufsicht auf eine weitere Ausgestaltung des Kolbenoberteils mit einer asymmetrisch ausgebildeten und exzentrisch angeordneten Verbrennungsmulde und mit einer Ventilnische und
- Fig. 9: einen Schnitt durch das Kolbenoberteil entlang der Linie IX-IX in Fig. 8.

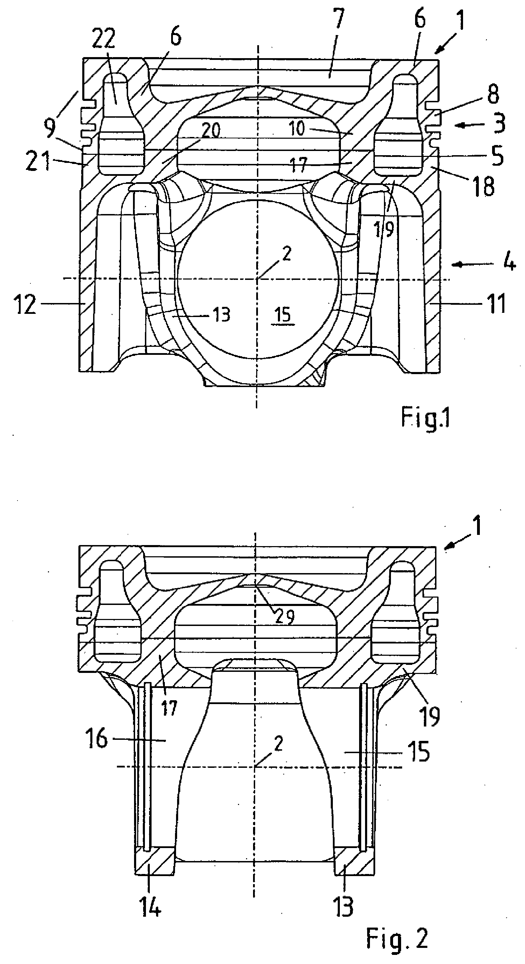

Fig. 1 zeigt eine Ausgestaltung eines nach dem erfindungsgemäßen Verfahren hergestellten Kolbens 1 im Schnitt senkrecht zur Bolzenachse 2 bestehend aus einem Kolbenoberteil 3 und einem Kolbenunterteil 4, die über eine Reibschweißnaht 5 miteinander verbunden sind.

Der Kolben 1 weist einen Kolbenboden 6 auf, in den eine Verbrennungsmulde 7 eingeformt ist. Radial außen ist an den Kolbenboden 6 eine nach unten gerichtete Ringwand 8 mit einer Ringpartie 9 für in der Figur nicht dargestellte Kolbenringe angeformt. Radial innerhalb der Ringwand 8 weist der Kolben 1 eine an die Unterseite des Kolbenbodens 6 angeformte, ringförmige Abstützung 10 auf.

Das Kolbenunterteil 4 besteht aus zwei einander gegenüberliegenden Schaftelementen 11 und 12, die über zwei einander gegenüberliegende Bolzennaben 13 und 14 mit je einer Bolzenbohrung 15 und 16 miteinander verbunden sind. In Fig. 1 ist wegen der Lage der Schnittebene nur die Bolzennabe 13 mit der Bolzenbohrung 15 zu sehen.

Auf der Oberseite des Kolbenunterteils 4 ist eine ringförmige und mit den Bolzennaben 13, 14 verbundene Auflage 17 angeordnet. Weiterhin weist das Kolbenunterteil 4 auf seiner Oberseite eine umlaufende, radial außerhalb der Auflage 17 angeordnete und mit dem Schaftelementen 11, 12 verbundene Ringrippe 18 auf. Zwischen der Auflage 17 und der Ringrippe 18 erstreckt sich ein radial ausgerichtetes Ringelement 19.

Hierbei sind die Abstützung 10 und die Auflage 17 so angeordnet, dass die Unterseite der Abstützung 10 und die Oberseite der Auflage 17 Kontakt zueinander haben und einen ersten Auflagebereich 20 bilden. Weiterhin sind die Ringwand 8 und die Ringrippe 18 so angeordnet, dass die untere Stirnseite der Ringwand 8 und die Oberseite der Ringrippe 18 ebenfalls Kontakt zueinander haben und einen zweiten Auflagebereich 21 bilden. Der erste und der zweite Auflagebereich 20 und 21 bilden bei der Herstellung des Kolbens 1 Reibschweißflächen.

Hierdurch ergibt sich, dass ein nahe dem Kolbenboden 6, radial außen angeordneter, umlaufender Kühlkanal 22 oben vom Kolbenboden 6, radial innen teils vom Kolbenboden 6, teils von der Abstützung 10 und teils von der Auflage 17, unten vom Ringelement 19 und radial außen teils von der Ringwand 8 und teils von der Ringrippe 18 begrenzt wird. Der Kühlkanal 22 weist eine Zulauföffnung zum Einleiten von Kühlöl und eine Ablauföffnung zum Ausleiten von Kühlöl auf, die aber in den Figuren nicht dargestellt sind.

In Fig. 2 ist der Kolben 1 im Schnitt entlang der Bolzenbohrungsachse 2 dargestellt. Zu sehen sind hier die beiden Bolzennaben 14, 15 mit der daran angeformten Auflage 17 und das mit der Auflage 17 beziehungsweise den Bolzennaben 13, 14 verbundene Ringelement 19.

Hergestellt wird der Kolben 1 aus AFP-Stahl, das heißt, aus ausscheidungsgehärtetem, ferritisch-perlitischem Stahl, wie beispielsweise aus Einsatzstahl 38MnVS6. Es kann auch jeder andere geeignete Stahl wie beispielsweise Vergütungsstahl 42CrMo4 verwendet werden. Hierbei erfolgt die Herstellung des Kolbenunterteils 4 auf herkömmliche Weise durch Gießen oder Warmschmieden.

Das Kolbenoberteil 3 wird durch das Verfahren des Warmumformens hergestellt. Hierbei wird ein Stück AFP-Stahl, das für das Gesenk der für das Kolbenoberteil 3 vorgesehenen Gesenkschmiedemaschine passend geformt ist, auf 1200°C bis 1300°C aufgeheizt und anschließend in mehreren Umformstufen, das heißt, Schmiedevorgängen in der gleichen Gesenkschmiedemaschine geformt beziehungsweise vorgeformt. Der während des Schmiedens entstandene Zunder wird mittels Strahlen entfernt.

Im Anschluss daran wird der fertig geschmiedete Oberteilrohling bei Raumtemperatur kaltkalibriert, wobei zum Erreichen der Endmaße alle Oberflächen des Kolbenoberteils 3 bei Raumtemperatur gepresst werden.

Alternativ dazu kann der vorgeformte Oberteilrohling auch durch eine Kaltumformung bei Raumtemperatur in seine endgültige Form gebracht werden. Vorteilhaft ist es in diesem Fall, wenn vor dem Strahlen noch ein Glühprozess durchgeführt wird, um die Rissneigung bei der Kaltumformung zu vermindern.

Außerdem können für die Erstellung der Vorform auch andere Prozesse angewandt werden, wie beispielsweise das Verfahren des Kaltumformens, des Halbwarmumformens oder des Fräsens. So kann die Vorform auch durch ein Feingießverfahren hergestellt werden. Um eine Verzunderung zu vermeiden, sollte dies letztere Verfahren unter einer Schutzgasatmosphäre angewandt werden.

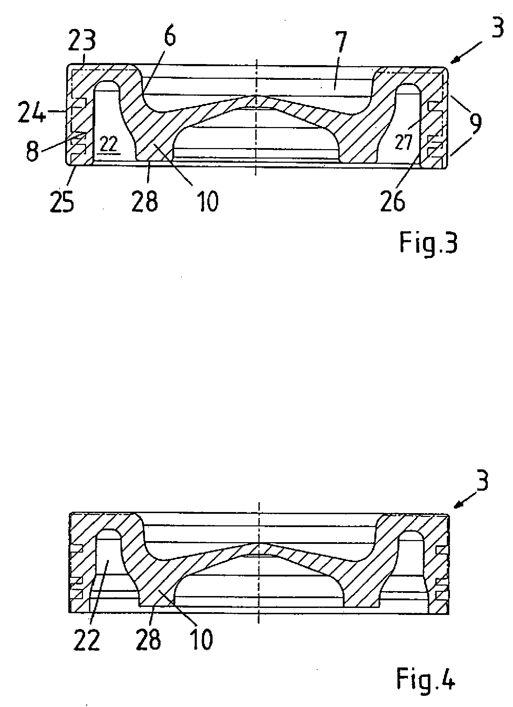

Der sich hierdurch ergebende Rohling des Kolbenoberteils 3 ist in Fig. 3 dargestellt. Hierbei werden die Verbrennungsmulde 7, der obere Kühlkanalbereich und der innere Dombereich 29 bereits fertig ausgeformt, sodass in diesen Bereichen keine weiteren Bearbeitungsschritte mehr erforderlich sind. Hierbei wird auch erreicht, dass die Wandstärke zwischen dem Muldenrand und oberen Kühlkanalbereich über den Umfang nahezu konstant ist. Das Kolbenoberteil 3, wie es nach der Fertigbearbeitung aussieht, ist in Fig. 3 gestrichelt eingezeichnet.

Im folgenden Verfahrensschritt werden der radial äußere Bereich 23 des Kolbenbodens 6, der für die Ringpartie 9 vorgesehene radial äußere Bereich 24 des Kolbenoberteils 3, die untere Stirnfläche 25 der Ringwand 8, der untere Bereich 26 der Innenfläche 27 der Ringwand 8 und die Auflagefläche 28 der Abstützung 10 durch Drehen bearbeitet, sodass sich das Kolbenoberteil 3, wie es in Fig. 4 dargestellt ist, ergibt. Der untere Bereich des Kühlkanals 22, die untere Stirnfläche 25 der Ringwand 8 und die Auflagefläche 28 der Abstützung 10 sind nach diesem letzteren Verfahrensschritt fertig ausgeformt. Auch hier ist das Kolbenoberteil 3, wie es nach der Fertigbearbeitung aussieht, gestrichelt eingezeichnet.

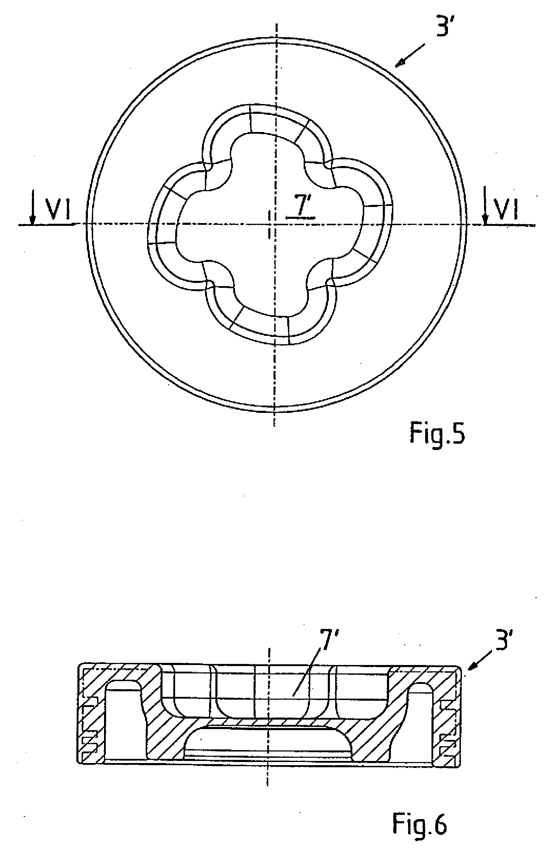

Das Herstellungsverfahren des Warmumformens in Kombination mit Kaltkalibrieren beziehungsweise des Kaltumformens erlaubt es insbesondere, Kolbenoberteile 3' mit Verbrennungsmulden 7' herzustellen, die, wie es in den Fig. 5 und 6 dargestellt ist, asymmetrisch ausgebildet und exzentrisch angeordnet sind. Auch hierbei ist keine weitere Bearbeitung der Verbrennungsmulde 7' mehr erforderlich, wenn der Vorgang des Warmumformens und des Kaltkalibrierens beziehungsweise des Kaltumformens des Kolbenoberteils 3' abgeschlossen ist.

Im vorliegenden Ausführungsbeispiel gemäß Fig. 5 und 6 hat die Verbrennungsmulde 7' näherungsweise die Form eines vierblättrigen Kleeblattes. Realisiert werden kann mit dem Verfahren des Warmumformens in Kombination mit Kaltkalibrieren beziehungsweise des Kaltumformens aber jede beliebige Form einer Verbrennungsmulde.

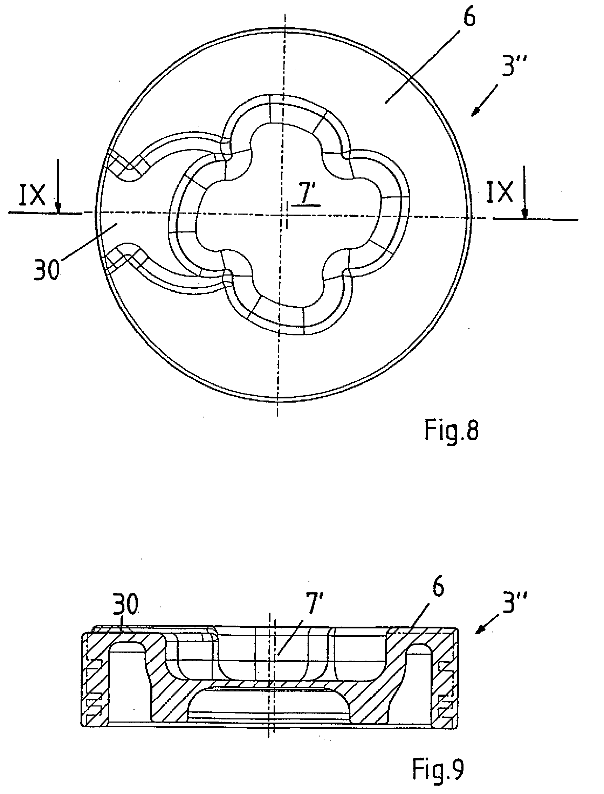

Die Figuren 8 und 9 zeigen das auf diese Weise hergestellte Kolbenoberteil gemäß Fig. 5 und 6, wobei in den Kolbenboden 6 des Kolbenoberteils 3" zusätzlich eine Ventilnische 30 eingeformt ist.

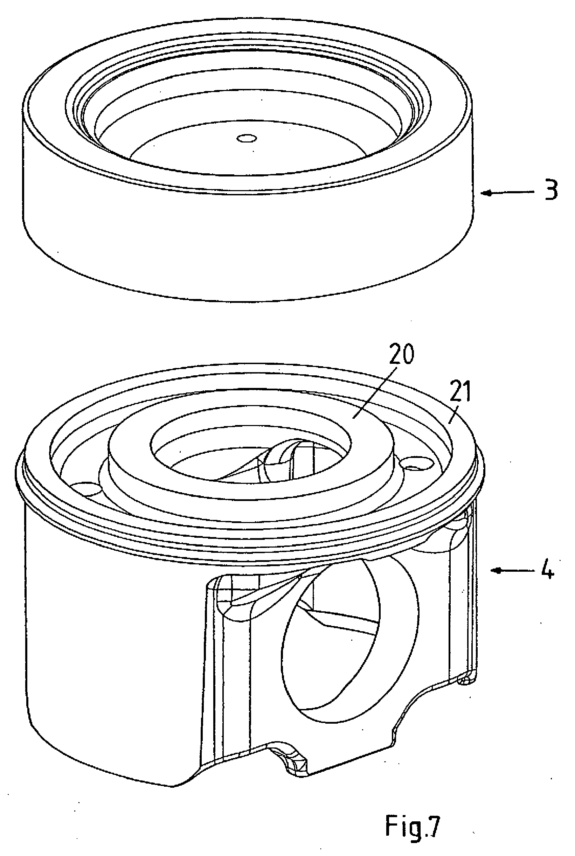

Das Kolbenoberteil 3, 3', 3" gemäß den Fig. 4, 5, 6, 8, 9 wird gemeinsam mit dem Kolbenunterteil 4 in eine (in der Figur nicht dargestellte) Reibschweißvorrichtung eingespannt und, wie in Fig. 7 dargestellt, zueinander in Position gebracht, um in Drehung versetzt, mit Kraft aufeinander zu bewegt und bei Kontakt des Kolbenoberteils 3, 3', 3" mit dem Kolbenunterteil 4 im Bereich der Auflagebereiche 20 und 21 miteinander reibverschweißt zu werden. Falls die Verbrennungsmulde 7' asymmetrisch oder außermittig ausgebildet ist, hat beim Reibschweißen dafür gesorgt zu werden, dass nach Abschluss des Schweißvorganges die Verbrennungsmulde 7' beispielsweise gegenüber der Bolzenachse 2 eine eindeutig definierte Drehstellung einnimmt.

Hierbei ergibt sich der in den Figuren 1 und 2 dargestellte Kolben 1.

Im Rahmen des letzten Verfahrensschritts werden die Nuten der Ringpartie 9 in die Kofbenaußenwand eingedreht und der Kolbenboden 6 flachgedreht, wie es in den Figuren 3 und 4 angedeutet ist. Außerdem werden die Kolbenfeinkontur und die Nabenbohrungen eingebracht.

### Bezugszeichenliste

1 Kolben
2 Bolzenachse
3,3',3" Kolbenoberteil
4 Kolbenunterteil
5 Reibschweißnaht
6 Kolbenboden
7, 7' Verbrennungsmulde
8 Ringwand
9 Ringpartie
10 Abstützung
11,12 Schaltelement
13,14 Bolzennabe
15,16 Bolzenbohrung
17 Auflage
18 Ringrippe
19 Ringelement
20 erster Auflagebereich
21 zweiter Auflagebereich
22 Kühlkanal
23 äußerer Bereich des Kolbenbodens 6
24 äußerer Bereich des Kolbenoberteils
25 untere Stirnfläche der Ringwand 8
26 unterer Bereich der Innenfläche 27 der Ringwand 8
27 Innenfläche der Ringwand 8
28 Auflagefläche der Abstützung 10
29 innerer Dombereich
30 Ventilnische

## Patentansprüche

1. Verfahren zur Herstellung eines Kolbens (1) für einen Verbrennungsmotor, mit den folgenden Verfahrensschritten:
- Herstellen eines Kolbenoberteils (3, 3', 3") aus Stahl im Schmiedeverfahren, das einen Kolbenboden (6) mit einer Verbrennungsmulde (7, 7'), eine radial außen an den Kolbenboden angeformte, nach unten gerichtete Ringwand (8) und eine radial innerhalb der Ringwand (8) angeordnete, an die Unterseite des Kolbenbodens (6) angeformte, ringförmige Abstützung (10) aufweist, wobei zwischen der Ringwand (8) und der Abstützung (10) der obere Teil eines Kühlkanals (22) gebildet wird,
- Herstellen eines Kolbenunterteils (4) aus Stahl im Schmiede- oder Gießverfahren, das zwei einander gegenüberliegende Schaftelemente (11, 12), die über zwei einander gegenüberliegende Bolzennaben (13, 14) miteinander verbunden sind, eine auf der Oberseite des Kolbenunterteils (4) angeordnete ringförmige und mit den Bolzennaben (13, 14) verbundene Auflage (17) und eine umlaufende, radial außerhalb der Auflage (17) angeordnete und mit den Schaftelementen (11, 12) verbundene Ringrippe (18) aufweist, wobei zwischen der Auflage (17) und der Ringrippe (18) der untere Teil des Kühlkanals (22) gebildet wird,
- Verschweißen des Kolbenoberteils (3, 3', 3") mit dem Kolbenunterteil (4) über miteinander in Kontakt tretende Auflageflächen einerseits der Ringwand (8) und der Ringrippe (18) und andererseits der Abstützung (10) und der Auflage (17), wobei der vom Kolbenoberteil (3) und vom Kolbenunterteil (4) gebildete Kühlkanal (22) geschlossen wird,
- Fertigbearbeitung des Kolbens (1) mit Hilfe eines spanenden Fertigungsverfahrens, **dadurch gekennzeichnet,**
- **dass** zur Herstellung des Kolbenoberteils (3, 3', 3") ein Kolbenoberteilrohling mit Hilfe des Warmumformverfahrens bei 1200°C bis 1300°C geschmiedet wird, wonach der Kolbenoberteilrohling bei Raumtemperatur kaltkalibriert wird, wonach die Verbrennungsmulde (7, 7') und/oder der obere Teil des Kühlkanals (22) keine weitere Bearbeitung erfahren, und wonach der radial äußere Bereich (23) des Kolbenbodens (6), der radial äußere Bereich der Ringwand (8), der untere Bereich (26) der Innenfläche (27) der Ringwand (8) und die Auflagefläche (28) der Abstützung des Kolbenoberteilrohlings zur Herstellung des Kolbenoberteils (3, 3', 3") fertig bearbeitet werden.

2. Verfahren zur Herstellung eines Kolbens (1,) für einen Verbrennungsmotor nach Anspruch 1, **dadurch gekennzeichnet, dass** das Kolbenoberteil (3, 3', 3") mit einer konstanten Dicke des Bereichs des Kolbenbodens (6) zwischen dem Muldenrand der Verbrennungsmulde (7, 7') und dem Kühlkanal (22) geschmiedet wird.

3. Verfahren zur Herstellung eines Kolbens (1) für einen Verbrennungsmotor nach Anspruch 1 oder 2, **dadurch gekennzeichnet, dass** in das Kolbenoberteil (3', 3") eine asymmetrisch ausgebildete und exzentrisch angeordnete Verbrennungsmulde (7') eingeformt wird.

4. Verfahren zur Herstellung eines Kolbens (1) für einen Verbrennungsmotor nach einem der Ansprüche 1 bis 3, **dadurch gekennzeichnet, dass** in das Kolbenoberteil (3") mindestens eine Ventilnische (30) eingeformt wird.

5. Verfahren zur Herstellung eines Kolbens (1,) für einen Verbrennungsmotor, mit den folgenden Verfahrensschritten:
- Herstellen eines Kolbenoberteils (3, 3', 3") aus Stahl im Schmiedeverfahren, das einen Kolbenboden (6) mit einer Verbrennungsmulde (7, 7'), eine radial außen an den Kolbenboden angeformte nach unten gerichtete Ringwand (8) und eine radial innerhalb der Ringwand (8) angeordnete, an die Unterseite des Kolbenbodens (6) angeformte, ringförmige Abstützung (10) aufweist, wobei zwischen der Ringwand (8) und der Abstützung (10) der obere Teil eines Kühlkanals (22) gebildet wird,
- Herstellen eines Kolbenunterteils (4) aus Stahl im Schmiede- oder Gießverfahren, das zwei einander gegenüberliegende Schaftelemente (11, 12), die über zwei einander gegenüberliegende Bolzennaben (13, 14) miteinander verbunden sind, eine auf der Oberseite des Kolbenunterteils (4) angeordnete ringförmige und mit den Bolzennaben (13,14) verbundene Auflage (17) und eine umlaufende, radial außerhalb der Auflage (17) angeordnete und mit den Schaftelementen (11, 12) verbundene Ringrippe (18) aufweist, wobei zwischen der Auflage (17) und der Ringrippe (18) der untere Teil des Kühlkanals (22) gebildet wird,
- Verschweißen des Kolbenoberteils (3, 3', 3") mit dem Kolbenunterteil (4) über miteinander in Kontakt tretende Auflageflächen einerseits der Ringwand (8) und der Ringrippe (18) und andererseits der Abstützung (10) und der Auflage (17), wobei der vom Kolbenoberteil (3) und vom Kolbenunterteil (4) gebildete Kühlkanal (22) geschlossen wird,
- Fertigbearbeitung des Kolbens (1) mit Hilfe eines spanenden Fertigungsver-fahrens,
**dadurch gekennzeichnet, dass** zur Herstellung des Kolbenoberteils (3, 3', 3") ein Kolbenoberteilrohling mit Hilfe des Warmformverfahrens bei 1200°C bis 1300°C vorgeformt wird, wonach der Kolbenoberteilrohling bei 0 °C bis 150 °C kaltumgeformt wird, wonach die Verbrennungsmulde (7, 7') und/oder der obere Teil des Kühlkanals (22) keine weitere Bearbeitung erfahren, und wonach der radial äußere Bereich (23) des Kolbenbodens (6), der radial äußere Bereich der Ringwand (8), der untere Bereich (26) der Innenfläche (27) der Ringwand (8) und die Auflagefläche (28) der Abstützung des Kolbenoberteilrohlings zur Herstellung des Kolbenoberteils (3, 3') fertig bearbeitet werden.

6. Verfahren zur Herstellung eines Kolbens (1,) für einen Verbrennungsmotor, mit den folgenden Verfahrensschritten:
- Herstellen eines Kolbenoberteils (3, 3', 3") aus Stahl im Schmiedeverfahren, das einen Kolbenboden (6) mit einer Verbrennungsmulde (7, 7'), eine radial außen an den Kolbenboden angeformte, nach unten gerichtete Ringwand (8) und eine radial innerhalb der Ringwand (8) angeordnete, an die Unterseite des Kolbenbodens (6) angeformte, ringförmige Abstützung (10) aufweist, wobei zwischen der Ringwand (8) und der Abstützung (10) der obere Teil eines Kühlkanals (22) gebildet wird,
- Herstellen eines Kolbenunterteils (4) aus Stahl im Schmiede- oder Gießverfahren, das zwei einander gegenüberliegende Schaftelemente (11, 12), die über zwei einander gegenüberliegende Bolzennaben (13, 14) miteinander verbunden sind, eine auf der Oberseite des Kolbenunterteils (4) angeordnete ringförmige und mit den Bolzennaben (13,14) verbundene Auflage (17) und eine umlaufende, radial außerhalb der Auflage (17) angeordnete und mit den Schaftelementen (11, 12) verbundene Ringrippe (18) aufweist, wobei zwischen der Auflage (17) und der Ringrippe (18) der untere Teil des Kühlkanals (22) gebildet wird,
- Verschweißen des Kolbenoberteils (3, 3', 3") mit dem Kolbenunterteil (4) über miteinander in Kontakt tretende Auflageflächen einerseits der Ringwand (8) und der Ringrippe (18) und andererseits der Abstützung (10) und der Auflage (17), wobei der vom Kolbenoberteil (3) und vom Kolbenunterteil (4) gebildete Kühlkanal (22) geschlossen wird,
- Fertigbearbeitung des Kolbens (1) mit Hilfe eines spanenden Fertigungsverfahrens,
**dadurch gekennzeichnet, dass** zur Herstellung des Kolbenoberteils (3, 3', 3") ein Kolbenoberteilrohling mit Hilfe des Halbwarmumformverfahrens bei 600°C bis 900°C vorgeformt wird, wonach der Kolbenoberteilrohling bei 0°C bis 150°C kaltumgeformt wird, wonach die Verbrennungsmulde (7, 7') und/oder der obere Teil des Kühlkanals (22) keine weitere Bearbeitung erfahren, und wonach der radial äußere Bereich (23) des Kolbenbodens (6), der radial äußere Bereich der Ringwand (8), der untere Bereich (26) der Innenfläche (27) der Ringwand (8) und die Auflagefläche (28) der Abstützung des Kolbenoberteilrohlings zur Herstellung des Kolbenoberteils (3, 3') fertig bearbeitet werden.

7. Verfahren zur Herstellung eines Kolbens (1,) für einen Verbrennungsmotor, mit den folgenden Verfahrensschritten:
- Herstellen eines Kolbenoberteils (3, 3, 3'") aus Stahl im Schmiedeverfahren, das einen Kolbenboden (6) mit einer Verbrennungsmulde (7, 7'), eine radial außen an den Kolbenboden angeformte, nach unten gerichtete Ringwand (8) und eine radial innerhalb der Ringwand (8) angeordnete, an die Unterseite des Kolbenbodens (6) angeformte, ringförmige Abstützung (10) aufweist, wobei zwischen der Ringwand (8) und der Abstützung (10) der obere Teil eines Kühlkanals (22) gebildet wird,
- Herstellen eines Kolbenunterteils (4) aus Stahl im Schmiede- oder Gießverfahren, das zwei einander gegenüberliegende Schaftelemente (11, 12), die über zwei einander gegenüberliegende Bolzennaben (13, 14) miteinander verbunden sind, eine auf der Oberseite des Kolbenunterteils (4) angeordnete ringförmige und mit den Bolzennaben (13,14) verbundene Auflage (17) und eine umlaufende, radial außerhalb der Auflage (17) angeordnete und mit den Schaftelementen (11, 12) verbundene Ringrippe (18) aufweist, wobei zwischen der Auflage (17) und der Ringrippe (18) der untere Teil des Kühlkanals (22) gebildet wird,
- Verschweißen des Kolbenoberteils (3, 3', 3") mit dem Kolbenunterteil (4) über miteinander in Kontakt tretende Auflageflächen einerseits der Ringwand (8) und der Ringrippe (18) und andererseits der Abstützung (10) und der Auflage (17), wobei der vom Kolbenoberteil (3) und vom Kolbenunterteil (4) gebildete Kühlkanal (22) geschlossen wird,
- Fertigbearbeitung des Kolbens (1) mit Hilfe eines spanenden Fertigungsverfahrens,
**dadurch gekennzeichnet, dass** zur Herstellung des Kolbenoberteils (3, 3', 3") ein Kolbenoberteilrohling vorgeformt wird, wonach der Kolbenoberteilrohling bei 0°C bis 150°C kaltumgeformt wird, wonach die Verbrennungsmulde (7, 7') und/oder der obere Teil des Kühlkanals (22) keine weitere Bearbeitung erfahren, und wonach der radial äußere Bereich (23) des Kolbenbodens (6), der radial äußere Bereich der Ringwand (8), der untere Bereich (26) der Innenfläche (27) der Ringwand (8) und die Auflagefläche (28) der Abstützung des Kolbenoberteilrohlings zur Herstellung des Kolbenoberteils (3, 3') fertig bearbeitet werden.

## Claims

1. Method for producing a piston (1) for an internal combustion engine, having the following method steps:
- producing, from steel in a forging process, a piston upper part (3, 3', 3") that has a piston crown (6) with a combustion depression (7, 7'), a downwards-oriented annular wall (8) formed radially outwards on the piston crown and an annular support (10) arranged radially inside the annular wall (8) and formed on the underside of the piston crown (6), wherein the upper part of a cooling duct (22) is formed between the annular wall (8) and the support (10),
- producing, from steel in a forging or casting process, a piston lower part (4) that has two mutually opposing shaft elements (11, 12) which are connected to one another via two mutually opposing pin bosses (13, 14), an annular contact (17) arranged on the upper side of the piston lower part (4) and connected to the pin bosses (13, 14), and a circumferential annular rib (18) arranged radially outwards of the contact (17) and connected to the shaft elements (11, 12), wherein the lower part of the cooling duct (22) is formed between the contact (17) and the annular rib (18),
- welding the piston upper part (3, 3', 3") to the piston lower part (4) via mutually contacting contact surfaces, on one hand of the annular wall (8) and of the annular rib (18) and on the other hand of the support (10) and of the contact (17), thus closing the cooling duct (22) formed by the piston upper part (3) and by the piston lower part (4),
- finishing the piston (1) with the aid of a chip-removing finishing method,
**characterized in that**
- for producing the piston upper part (3, 3', 3" ), a piston upper part blank is forged by hot working at 1200°C to 1300°C, after which the piston upper part blank is cold calibrated at room temperature, after which the combustion depression (7, 7') and/or the upper part of the cooling duct (22) undergo no further processing, and after which the radially outer region (23) of the piston crown (6), the radially outer region of the annular wall (8), the lower region (26) of the internal surface (27) of the annular wall (8) and the contact surface (28) of the support of the piston upper part blank are finished in order to produce the piston upper part (3, 3', 3").

2. Method for producing a piston (1) for an internal combustion engine according to Claim 1, **characterized in that** the piston upper part (3, 3', 3") is forged with a constant thickness in the region of the piston crown (6) between the rim of the combustion depression (7, 7') and the cooling duct (22).

3. Method for producing a piston (1) for an internal combustion engine according to Claim 1 or 2, **characterized in that** an asymmetric combustion depression (7') is arranged eccentrically in the piston upper part (3', 3").

4. Method for producing a piston (1) for an internal combustion engine according to one of Claims 1 to 3, **characterized in that** at least one valve recess (30) is formed in the piston upper part (3").

5. Method for producing a piston (1) for an internal combustion engine, having the following method steps:
- producing, from steel in a forging process, a piston upper part (3, 3', 3") that has a piston crown (6) with a combustion depression (7, 7'), a downwards-oriented annular wall (8) formed radially outwards on the piston crown and an annular support (10) arranged radially inside the annular wall (8) and formed on the underside of the piston crown (6), wherein the upper part of a cooling duct (22) is formed between the annular wall (8) and the support (10),
- producing, from steel in a forging or casting process, a piston lower part (4) that has two mutually opposing shaft elements (11, 12) which are connected to one another via two mutually opposing pin bosses (13, 14), an annular contact (17) arranged on the upper side of the piston lower part (4) and connected to the pin bosses (13, 14), and a circumferential annular rib (18) arranged radially outwards of the contact (17) and connected to the shaft elements (11, 12), wherein the lower part of the cooling duct (22) is formed between the contact (17) and the annular rib (18),
- welding the piston upper part (3, 3', 3") to the piston lower part (4) via mutually contacting contact surfaces, on one hand of the annular wall (8) and of the annular rib (18) and on the other hand of the support (10) and of the contact (17), thus closing the cooling duct (22) formed by the piston upper part (3) and by the piston lower part (4),
- finishing the piston (1) with the aid of a chip-removing finishing method,
**characterized in that,** for producing the piston upper part (3, 3', 3"), a piston upper part blank is pre-formed by hot working at 1200°C to 1300°C, after which the piston upper part blank is cold formed at between 0°C and 150°C, after which the combustion depression (7, 7') and/or the upper part of the cooling duct (22) undergo no further processing, and after which the radially outer region (23) of the piston crown (6), the radially outer region of the annular wall (8), the lower region (26) of the internal surface (27) of the annular wall (8) and the contact surface (28) of the support of the piston upper part blank are finished in order to produce the piston upper part (3, 3').

6. Method for producing a piston (1) for an internal combustion engine, having the following method steps:
- producing, from steel in a forging process, a piston upper part (3, 3', 3") that has a piston crown (6) with a combustion depression (7, 7'), a downwards-oriented annular wall (8) formed radially outwards on the piston crown and an annular support (10) arranged radially inside the annular wall (8) and formed on the underside of the piston crown (6), wherein the upper part of a cooling duct (22) is formed between the annular wall (8) and the support (10),
- producing, from steel in a forging or casting process, a piston lower part (4) that has two mutually opposing shaft elements (11, 12) which are connected to one another via two mutually opposing pin bosses (13, 14), an annular contact (17) arranged on the upper side of the piston lower part (4) and connected to the pin bosses (13, 14), and a circumferential annular rib (18) arranged radially outwards of the contact (17) and connected to the shaft elements (11, 12), wherein the lower part of the cooling duct (22) is formed between the contact (17) and the annular rib (18),
- welding the piston upper part (3, 3', 3") to the piston lower part (4) via mutually contacting contact surfaces, on one hand of the annular wall (8) and of the annular rib (18) and on the other hand of the support (10) and of the contact (17), thus closing the cooling duct (22) formed by the piston upper part (3) and by the piston lower part (4),
- finishing the piston (1) with the aid of a chip-removing finishing method,
**characterized in that,** for producing the piston upper part (3, 3', 3"), a piston upper part blank is pre-formed by warm working at 600°C to 900°C, after which the piston upper part blank is cold formed at between 0°C and 150°C, after which the combustion depression (7, 7') and/or the upper part of the cooling duct (22) undergo no further processing, and after which the radially outer region (23) of the piston crown (6), the radially outer region of the annular wall (8), the lower region (26) of the internal surface (27) of the annular wall (8) and the contact surface (28) of the support of the piston upper part blank are finished in order to produce the piston upper part (3, 3').

7. Method for producing a piston (1) for an internal combustion engine, having the following method steps:
- producing, from steel in a forging process, a piston upper part (3, 3, 3'") that has a piston crown (6) with a combustion depression (7, 7'), a downwards-oriented annular wall (8) formed radially outwards on the piston crown and an annular support (10) arranged radially inside the annular wall (8) and formed on the underside of the piston crown (6), wherein the upper part of a cooling duct (22) is formed between the annular wall (8) and the support (10),
- producing, from steel in a forging or casting process, a piston lower part (4) that has two mutually opposing shaft elements (11, 12) which are connected to one another via two mutually opposing pin bosses (13, 14), an annular contact (17) arranged on the upper side of the piston lower part (4) and connected to the pin bosses (13, 14), and a circumferential annular rib (18) arranged radially outwards of the contact (17) and connected to the shaft elements (11, 12), wherein the lower part of the cooling duct (22) is formed between the contact (17) and the annular rib (18),
- welding the piston upper part (3, 3', 3") to the piston lower part (4) via mutually contacting contact surfaces, on one hand of the annular wall (8) and of the annular rib (18) and on the other hand of the support (10) and of the contact (17), thus closing the cooling duct (22) formed by the piston upper part (3) and by the piston lower part (4),
- finishing the piston (1) with the aid of a chip-removing finishing method,
**characterized in that,** for producing the piston upper part (3, 3', 3''), a piston upper part blank is pre-formed, after which the piston upper part blank is cold formed at between 0°C and 150°C, after which the combustion depression (7, 7') and/or the upper part of the cooling duct (22) undergo no further processing, and after which the radially outer region (23) of the piston crown (6), the radially outer region of the annular wall (8), the lower region (26) of the internal surface (27) of the annular wall (8) and the contact surface (28) of the support of the piston upper part blank are finished in order to produce the piston upper part (3, 3').

## Revendications

1. Procédé de fabrication d'un piston (1) pour un moteur à combustion interne, comprenant les étapes de procédé suivantes :
- fabrication d'une partie supérieure de piston (3, 3', 3") en acier par un procédé de forgeage, laquelle présente un fond de piston (6) avec une chambre de combustion (7, 7'), une paroi annulaire (8) orientée vers le bas, façonnée radialement à l'extérieur au niveau du fond de piston, et un support (10) de forme annulaire, disposé radialement à l'intérieur de la paroi annulaire (8), façonné au niveau du côté inférieur du fond de piston (6), la partie supérieure d'un canal de refroidissement (22) étant formée entre la paroi annulaire (8) et le support (10),
- fabrication d'une partie inférieure de piston (4) en acier par un procédé de forgeage ou de coulée, laquelle présente deux éléments d'arbre (11, 12) opposés l'un à l'autre qui sont connectés l'un à l'autre par le biais de deux moyeux d'axe (13, 14) opposés l'un à l'autre, un appui (17) de forme annulaire disposé sur le côté supérieur de la partie inférieure de piston (4) et connecté aux moyeux d'axe (13, 14) et une nervure annulaire (18) périphérique, disposée radialement à l'extérieur de l'appui (17) et connectée aux éléments d'arbre (11, 12), la partie inférieure du canal de refroidissement (22) étant formée entre l'appui (17) et la nervure annulaire (18),
- soudage de la partie supérieure de piston (3, 3', 3") à la partie inférieure de piston (4) par le biais de surfaces d'appui venant en contact l'une avec l'autre, d'une part de la paroi annulaire (8) et de la nervure annulaire (18) et d'autre part du support (10) et de l'appui (17), le canal de refroidissement (22) formé par la partie supérieure de piston (3) et par la partie inférieure de piston (4) étant fermé,
- traitement de finition du piston (1) à l'aide d'un procédé de fabrication par enlèvement de copeaux,
**caractérisé en ce que**
- pour la fabrication de la partie supérieure de piston (3, 3', 3"), une ébauche de partie supérieure de piston est forgée à l'aide du procédé de formage à chaud entre 1200°C et 1300°C, ensuite l'ébauche de partie supérieure de piston est étalonnée à froid à la température ambiante, puis la chambre de combustion (7, 7') et/ou la partie supérieure du canal de refroidissement (22) ne subissent plus de traitement ultérieur, puis la région radialement extérieure (23) du fond de piston (6), la région radialement extérieure de la paroi annulaire (8), la région inférieure (26) de la surface intérieure (27) de la paroi annulaire (8) et la surface d'appui (28) du support de l'ébauche de la partie supérieure de piston pour la fabrication de la partie supérieure de piston (3, 3', 3") subissent un traitement de finition.

2. Procédé de fabrication d'un piston (1) pour un moteur à combustion interne selon la revendication 1, **caractérisé en ce que** la partie supérieure de piston (3, 3', 3") est forgée avec une épaisseur constante de la région du fond de piston (6) entre le bord de chambre de la chambre de combustion (7, 7') et le canal de refroidissement (22).

3. Procédé de fabrication d'un piston (1) pour un moteur à combustion interne selon la revendication 1 ou 2, **caractérisé en ce que** dans la partie supérieure de piston (3', 3") est formée une chambre de combustion (7') réalisée de manière asymétrique et disposée de manière excentrique.

4. Procédé de fabrication d'un piston (1) pour un moteur à combustion interne selon l'une quelconque des revendications 1 à 3, **caractérisé en ce que** dans la partie supérieure de piston (3") est formée au moins une cavité de soupape (30).

5. Procédé de fabrication d'un piston (1) pour un moteur à combustion interne, comprenant les étapes de procédé suivantes :
- fabrication d'une partie supérieure de piston (3, 3', 3") en acier par un procédé de forgeage, laquelle présente un fond de piston (6) avec une chambre de combustion (7, 7'), une paroi annulaire (8) orientée vers le bas, façonnée radialement à l'extérieur au niveau du fond de piston, et un support (10) de forme annulaire, disposé radialement à l'intérieur de la paroi annulaire (8), façonné au niveau du côté inférieur du fond de piston (6), la partie supérieure d'un canal de refroidissement (22) étant formée entre la paroi annulaire (8) et le support (10),
- fabrication d'une partie inférieure de piston (4) en acier par un procédé de forgeage ou de coulée, laquelle présente deux éléments d'arbre (11, 12) opposés l'un à l'autre qui sont connectés l'un à l'autre par le biais de deux moyeux d'axe (13, 14) opposés l'un à l'autre, un appui (17) de forme annulaire disposé sur le côté supérieur de la partie inférieure de piston (4) et connecté aux moyeux d'axe (13, 14) et une nervure annulaire (18) périphérique, disposée radialement à l'extérieur de l'appui (17) et connectée aux éléments d'arbre (11, 12), la partie inférieure du canal de refroidissement (22) étant formée entre l'appui (17) et la nervure annulaire (18),
- soudage de la partie supérieure de piston (3, 3', 3'') à la partie inférieure de piston (4) par le biais de surfaces d'appui venant en contact l'une avec l'autre, d'une part de la paroi annulaire (8) et de la nervure annulaire (18) et d'autre part du support (10) et de l'appui (17), le canal de refroidissement (22) formé par la partie supérieure de piston (3) et par la partie inférieure de piston (4) étant fermé,
- traitement de finition du piston (1) à l'aide d'un procédé de fabrication par enlèvement de copeaux,
**caractérisé en ce que** pour la fabrication de la partie supérieure de piston (3, 3', 3"), une ébauche de partie supérieure de piston est préformée à l'aide du procédé de formage à chaud entre 1200°C et 1300°C, ensuite l'ébauche de partie supérieure de piston est formée à froid entre 0°C et 150°C, ensuite la chambre de combustion (7, 7') et/ou la partie supérieure du canal de refroidissement (22) ne subissent plus de traitement supplémentaire et ensuite la région radialement extérieure (23) du fond de piston (6), la région radialement extérieure de la paroi annulaire (8), la région inférieure (26) de la surface intérieure (27) de la paroi annulaire (8) et la surface d'appui (28) du support de l'ébauche de partie supérieure de piston pour la fabrication de la partie supérieure de piston (3, 3') subissent un traitement de finition.

6. Procédé de fabrication d'un piston (1) pour un moteur à combustion interne, comprenant les étapes de procédé suivantes :
- fabrication d'une partie supérieure de piston (3, 3', 3") en acier par un procédé de forgeage, laquelle présente un fond de piston (6) avec une chambre de combustion (7, 7'), une paroi annulaire (8) orientée vers le bas, façonnée radialement à l'extérieur au niveau du fond de piston, et un support (10) de forme annulaire, disposé radialement à l'intérieur de la paroi annulaire (8), façonné au niveau du côté inférieur du fond de piston (6), la partie supérieure d'un canal de refroidissement (22) étant formée entre la paroi annulaire (8) et le support (10),
- fabrication d'une partie inférieure de piston (4) en acier par un procédé de forgeage ou de coulée, laquelle présente deux éléments d'arbre (11, 12) opposés l'un à l'autre qui sont connectés l'un à l'autre par le biais de deux moyeux d'axe (13, 14) opposés l'un à l'autre, un appui (17) de forme annulaire disposé sur le côté supérieur de la partie inférieure de piston (4) et connecté aux moyeux d'axe (13, 14) et une nervure annulaire (18) périphérique, disposée radialement à l'extérieur de l'appui (17) et connectée aux éléments d'arbre (11, 12), la partie inférieure du canal de refroidissement (22) étant formée entre l'appui (17) et la nervure annulaire (18),
- soudage de la partie supérieure de piston (3, 3', 3") à la partie inférieure de piston (4) par le biais de surfaces d'appui venant en contact l'une avec l'autre, d'une part de la paroi annulaire (8) et de la nervure annulaire (18) et d'autre part du support (10) et de l'appui (17), le canal de refroidissement (22) formé par la partie supérieure de piston (3) et par la partie inférieure de piston (4) étant fermé,
- traitement de finition du piston (1) à l'aide d'un procédé de fabrication par enlèvement de copeaux,
**caractérisé en ce que** pour la fabrication de la partie supérieure de piston (3, 3', 3"), une ébauche de partie supérieure de piston est préformée à l'aide du procédé de formage à michaud entre 600°C et 900°C, ensuite l'ébauche de partie supérieure de piston est formée à froid entre 0°C et 150°C, ensuite la chambre de combustion (7, 7') et/ou la partie supérieure du canal de refroidissement (22) ne subissent plus de traitement supplémentaire et ensuite la région radialement extérieure (23) du fond de piston (6), la région radialement extérieure de la paroi annulaire (8), la région inférieure (26) de la surface intérieure (27) de la paroi annulaire (8) et la surface d'appui (28) du support de l'ébauche de partie supérieure de piston pour la fabrication de la partie supérieure de piston (3, 3') subissent un traitement de finition.

7. Procédé de fabrication d'un piston (1) pour un moteur à combustion interne, comprenant les étapes de procédé suivantes :
- fabrication d'une partie supérieure de piston (3, 3, 3'") en acier par un procédé de forgeage, laquelle présente un fond de piston (6) avec une chambre de combustion (7, 7'), une paroi annulaire (8) orientée vers le bas, façonnée radialement à l'extérieur au niveau du fond de piston, et un support (10) de forme annulaire, disposé radialement à l'intérieur de la paroi annulaire (8), façonné au niveau du côté inférieur du fond de piston (6), la partie supérieure d'un canal de refroidissement (22) étant formée entre la paroi annulaire (8) et le support (10),
- fabrication d'une partie inférieure de piston (4) en acier par un procédé de forgeage ou de coulée, laquelle présente deux éléments d'arbre (11, 12) opposés l'un à l'autre qui sont connectés l'un à l'autre par le biais de deux moyeux d'axe (13, 14) opposés l'un à l'autre, un appui (17) de forme annulaire disposé sur le côté supérieur de la partie inférieure de piston (4) et connecté aux moyeux d'axe (13, 14) et une nervure annulaire (18) périphérique, disposée radialement à l'extérieur de l'appui (17) et connectée aux éléments d'arbre (11, 12), la partie inférieure du canal de refroidissement (22) étant formée entre l'appui (17) et la nervure annulaire (18),
- soudage de la partie supérieure de piston (3, 3', 3") à la partie inférieure de piston (4) par le biais de surfaces d'appui venant en contact l'une avec l'autre, d'une part de la paroi annulaire (8) et de la nervure annulaire (18) et d'autre part du support (10) et de l'appui (17), le canal de refroidissement (22) formé par la partie supérieure de piston (3) et par la partie inférieure de piston (4) étant fermé,
- traitement de finition du piston (1) à l'aide d'un procédé de fabrication par enlèvement de copeaux,
**caractérisé en ce que** pour la fabrication de la partie supérieure de piston (3, 3', 3"), une ébauche de partie supérieure de piston est préformée, ensuite l'ébauche de partie supérieure de piston est façonnée à froid entre 0°C et 150°C, ensuite la chambre de combustion (7, 7') et/ou la partie supérieure du canal de refroidissement (22) ne subissent plus de traitement ultérieur, puis la région radialement extérieure (23) du fond de piston (6), la région radialement extérieure de la paroi annulaire (8), la région inférieure (26) de la surface intérieure (27) de la paroi annulaire (8) et la surface d'appui (28) du support de l'ébauche de la partie supérieure de piston pour la fabrication de la partie supérieure de piston (3, 3') subissent un traitement de finition.
